# EUROPEAN PATENT SPECIFICATION

(11) **EP 3 264 724 B1**
(45) Date of publication and mention of the grant of the patent: **26.06.2019**
(21) Application number: 15888318.1
(22) Date of filing: 15.09.2015
(51) Int. Cl.: H04L 29/08

(54) **METHOD AND APPARATUS FOR SENDING, TRANSFERRING AND ACQUIRING CAPABILITY**
VERFAHREN UND VORRICHTUNG ZUM SENDEN, ÜBERTRAGEN UND ERFASSEN VON FÄHIGKEITEN
PROCÉDÉ ET APPAREIL D'ENVOI, DE TRANSFERT ET D'ACQUISITION DE CAPACITÉ

(30) Priority: 09.04.2015 CN 201510166145
(43) Date of publication of application: 03.01.2018
(73) Proprietor: ZTE Corporation, Shenzhen, Guangdong 518057 (CN)
(72) Inventor: MENG, Wei, Shenzhen Guangdong 518057 (CN); WANG, Cui, Shenzhen Guangdong 518057 (CN)
(74) Representative: Broderick, Terence
(86) International application number: PCT/CN2015/089662
(87) International publication number: WO 2016/161765

(56) References cited:
- WO-A1-2014/047548
- CN-A- 102 148 767
- CN-A- 102 447 630
- CN-A- 103 906 037
- BOUCADAIR FRANCE TELECOM T REDDY CISCO M: "Retrieving the Capabilities of a PCP-controlled Device; draft-boucadair-pcp-capability-03.txt", RETRIEVING THE CAPABILITIES OF A PCP-CONTROLLED DEVICE; DRAFT-BOUCADAIR-PCP-CAPABILITY-03.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 25 November 2013 (2013-11-25), pages 1-7, XP015092828, [retrieved on 2013-11-25]
- PERREAULT S ET AL: "Port Control Protocol (PCP) Proxy Function; draft-ietf-pcp-proxy-06.txt", PORT CONTROL PROTOCOL (PCP) PROXY FUNCTION; DRAFT-IETF-PCP-PROXY-06.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 17 December 2014 (2014-12-17), pages 1-12, XP015103612, [retrieved on 2014-12-17]

## Description

### Technical Field

The present application relates to, but is not limited to, the field of communication.

### Background

At present, network address translation (NAT) in the related technology belongs to an access wide area network (WAN) technology and is a translation technology of translating private (reserved) addresses into legal Internet Protocol (IP) addresses. The NAT is widely applied in various types of Internet access modes and various types of networks. The NAT can solve the problem of shortage of IP addresses.

However, the application of the NAT has brought a lot of problems, for example, many applications cannot traverse the NAT, and a host of the extranet cannot access a host of the intranet actively, such that many point-to-point applications are restricted.

Port control protocol (PCP) is a critical protocol in the NAT technical scene, and its purpose is to provide a mechanism of creating mapping entries dynamically at the NATs and firewalls to forward traffic of the extranet accessing the intranet actively. When nodes of the NAT internal network receive the traffic of the external network, if the internal nodes have not been connected to a source end of the traffic, the traffic will be discarded at an NAT device. Before the traffic passes the NAT device, NAT mapping entries about the traffic are established at the NAT device by using the PCP technology. When the traffic is coming, the traffic can traverse the NAT device to reach the internal receiving nodes.

In the related technology, a PCP client may acquire an IP address or IP addresses of one or more PCP servers through an option of the dynamic host configuration protocol (DHCP), including DHCPv4 and DHCPv6, or other bearer protocols. The PCP client selects one of these PCP servers as a server matching the PCP client itself. In practical applications, in the related technology, the PCP client can only acquire the IP addresses of one or more PCP servers and the PCP client cannot select a PCP server which suits the PCP client itself according to this information.

### Summary

The following is a summary of the subject matter described herein in detail. The invention is defined by the appended claims.

In embodiments of the present invention, the problem in the related technology that the PCP client cannot acquire the PCP server capabilities, thereby resulting in the defect that the PCP client cannot select a PCP server, is solved by transferring the related PCP server capabilities to the PCP client, which provides an efficient basis for the PCP client to select the server.

After the accompanying drawings and detailed description are read and understood, other aspects can be understood.

### Brief Description of Drawings

FIG. 1 is a schematic diagram of an application scenario in accordance with an embodiment of the present invention.
FIG. 2 is a flow chart of a PCP server in accordance with an embodiment of the present invention.
FIG. 3 is a flow chart of a bearer protocol server in accordance with an embodiment of the present invention.
FIG. 4 is a flow chart of a PCP client in accordance with an embodiment of the present invention.
FIG. 5 is a diagram of interaction between messages of a PCP client and a bearer protocol server in accordance with an embodiment of the present invention.
FIG. 6 is a schematic diagram of a position of a PCP server capability value in a bearer protocol message in accordance with an embodiment of the present invention.
FIG. 7 is a schematic diagram of a first embodiment of the present invention.
FIG. 8 is a schematic diagram of a second embodiment of the present invention.
FIG. 9 is a schematic diagram of a third embodiment of the present invention.
FIG. 10 is a schematic diagram of a fourth embodiment of the present invention.
FIG. 11 is a block diagram of an apparatus for sending a capability in accordance with an embodiment of the present invention;
FIG. 12 is a block diagram of an apparatus for transferring a capability in accordance with an embodiment of the present invention.
FIG. 13 is a block diagram of an apparatus for acquiring a capability in accordance with an embodiment of the present invention.

### Detailed Description

Embodiments of the present invention will be described in detail below in conjunction with the accompanying drawings. It should be noted that the embodiments in the present application and features in the embodiments can be combined with each other arbitrarily without conflict.

Steps shown in the flow charts of the accompanying drawings may be executed such as in a computer system with a set of computer executable instructions. Moreover, although a logical order is shown in the flow chart, in some cases, the steps shown or described may be executed in an order different from the order herein.

In the related technology, a Port Control Protocol (PCP) client can acquire an IP address or a plurality of IP addresses of one or more PCP servers through an option of the DHCP protocol or other bearer protocols. The PCP client selects one of these PCP servers as a server matching the PCP client itself. In practical applications, in the related technology, only the one IP address or the plurality of IP addresses of one or more PCP servers can be acquired, but capabilities and priorities of these PCP servers supporting NAT cannot be acquired. In such case, the PCP client cannot select a server correctly according to the NAT capabilities.

For example, an application of a certain client needs to apply for 10 NAT sessions, and at this point, there are two selectable PCP servers. A utilization rate of the first public network resources is 98%, and a utilization rate of the second public network resources is only 10%. In such case, the client should select preferentially the second PCP server for peer-to-peer communication. However, in the related technology, IP addresses of the two PCP servers will be sent to the client, but the client cannot make a correct choice.

In the embodiments of the present invention, a PCP server capability option is added in an extension option of a bearer protocol to solve the defect in the related technology that the PCP client cannot select a server correctly.

The bearer protocol is a protocol except the PCP. The PCP client is served as a client of the bearer protocol to complete functions performed by the bearer protocol. For example, the bearer protocol can be a DHCPv4 protocol, a DHCPv6 protocol, a neighbor discovery protocol, a routing protocol, etc.

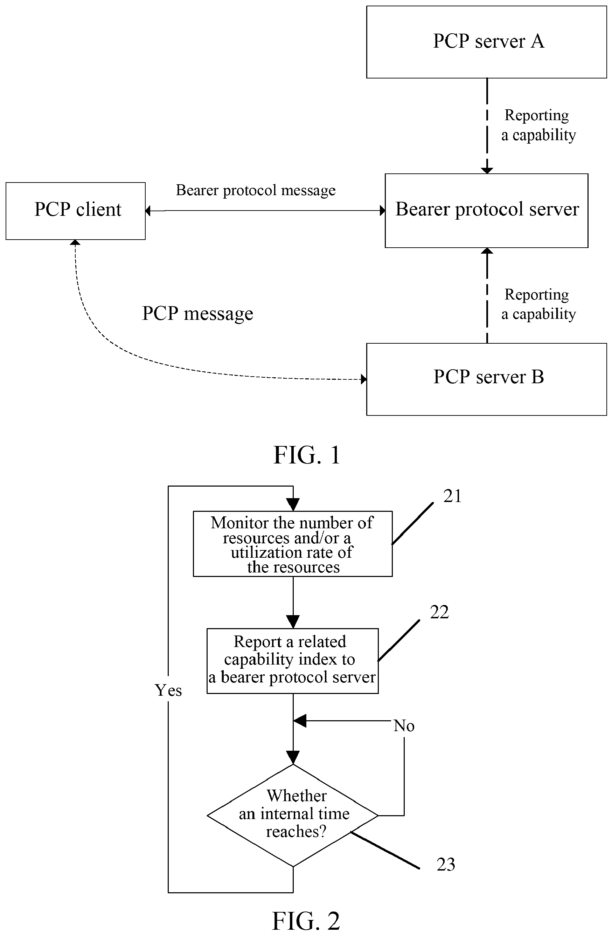

As shown in FIG. 1, it is a schematic diagram of an application scenario in accordance with an embodiment of the present invention. Herein one or more PCP servers (only two servers, a PCP server A and a PCP server B, are shown in the figure, and there may also be one or more PCP servers in practical applications) report their own capabilities to a bearer protocol server. The bearer protocol server sends the capability information to a PCP client through a bearer protocol message. And the PCP client selects an appropriate PCP server to be connected according to the capability information. For example, the PCP client in this figure selects the PCP server B.

In an embodiment of the present invention, for the PCP server, as shown in FIG. 2, the following steps are included.

In step 21, the PCP server monitors a PCP server capability index of the PCP server itself.

In step 22, the PCP server sends its own PCP server capability index to a bearer protocol server.

Herein, the PCP server capability index includes a number of PCP resources and/or a utilization rate of the PCP resources. That is, the PCP server sends at least one of the number of the PCP resources and the utilization rate of the PCP resources to the bearer protocol server.

The number of the PCP resources refers to the number of protocol ports owned by the PCP server.

The utilization rate of the PCP resources refers to a percent of the number of the protocol ports which have been used by the PCP server divided by the number of the PCP resources.

It can be seen from FIG. 2 that the embodiment of the present invention may further include step 23, in which the PCP server determines whether an interval time reaches, and if the interval time reaches, then the step 21 and 22 will be performed, i.e., the PCP server monitors its own PCP server capability index at a certain time interval and reports them to the bearer protocol server periodically.

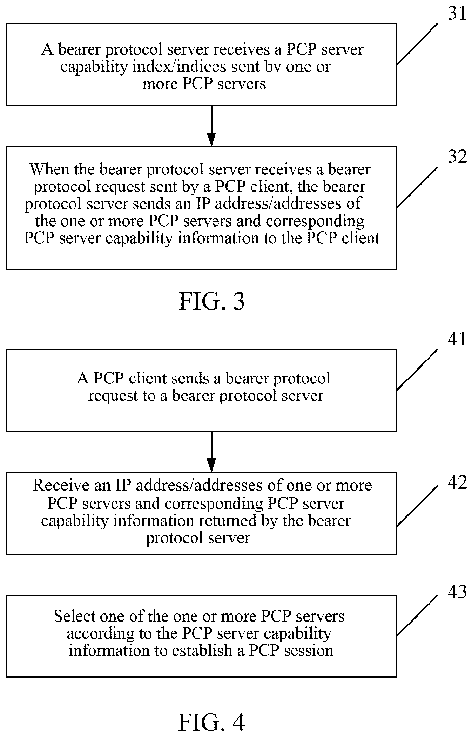

As shown in FIG. 3, in an embodiment of the present invention, for a bearer protocol server, the following steps are included.

In step 31, the bearer protocol server receives a PCP server capability index or capability indices sent by one or more PCP servers.

In step 32, when the bearer protocol server receives a bearer protocol request sent by a PCP client, the bearer protocol server sends an IP address or IP addresses of the one or more PCP servers and corresponding PCP server capability information of the one or more PCP servers to the PCP client.

Herein, the PCP server capability information corresponds to the PCP server capability indices and contains capability values.

A principle of setting the capability values may be that:
the bearer protocol server sets the corresponding capability values according to the received one or more PCP server capability indices based on strength of the capabilities; or the bearer protocol server directly uses the PCP server capability indices as the capability values.

When the capability values may be set based on the strength of the capabilities, the following manner may be used. The bearer protocol server sorts the capabilities in the order of strength according to the received one or more PCP server capability indices, and sets the corresponding capability values based on the sort result; or the PCP server capability indices are divided into different intervals according to the strength of the capabilities, and the PCP server capability indices located in different intervals corresponds to different capability values; etc..

The bearer protocol server may be a network device, such as a DHCP server, a router, a switch, a Firewall, etc.

The bearer protocol server may also be a PCP server.

As shown in FIG. 4, in an embodiment of the present invention, for a PCP client, the following steps are included.

In step 41, the PCP client sends a bearer protocol request to a bearer protocol server.

In step 42, an IP address or IP addresses of one or more PCP servers and corresponding PCP server capability information returned by the bearer protocol server are received.

In step 43, one of the one or more PCP servers is selected according to the PCP server capability information to establish a PCP session.

Herein, the PCP client selects a PCP server according a selection strategy. The selection strategy may be to select a PCP server with the strongest capability, or to select a PCP server with the corresponding capability level according to a user level principle.

The PCP client may a network device, such as a router, a switch, a Firewall, etc., or may be a terminal, such a personal computer, a cell phone, etc.

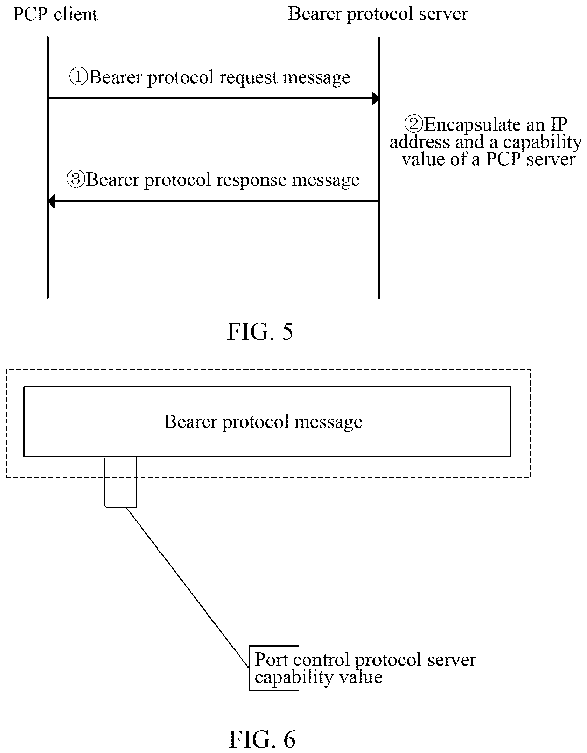

As shown in FIG. 5, interaction between the PCP client and the bearer protocol server includes the following steps 1-3.

In step 1, the PCP client sends a bearer protocol request message to the bearer protocol server.

In step 2, the bearer protocol server encapsulates the IP addresses of the PCP servers and the corresponding PCP server capability values into a bearer protocol response message.

In step 3, the bearer protocol server sends a bearer protocol response message to the PCP client.

As shown in FIG. 6, a schematic diagram of a position of a PCP server capability value in a bearer protocol message is shown.

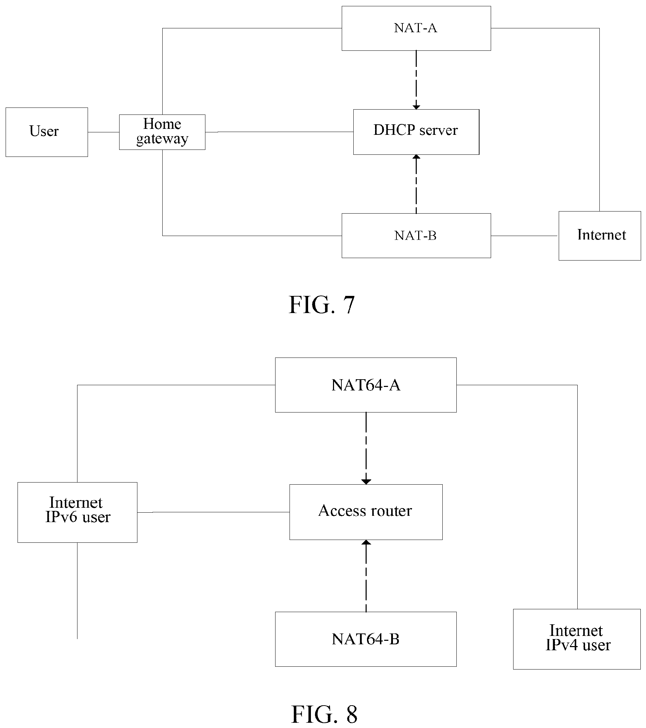

FIG. 7 is a schematic diagram of the first embodiment of the present invention. As shown in FIG. 7, an intranet user and an Internet user access with each other through an NAT-A and an NAT-B. A home gateway is used as the PCP client, and the NAT-A and NAT-B are used as the PCP servers respectively, and a DHCP server is used as the bearer protocol server. Steps are as follows.

In step S101, an Internet user needs to access the intranet user by traversing a Firewall, and the intranet user needs to create a session on the NAT-A or the NAT-B.

In step S102, the NAT-A owns 10 public network IP addresses, 80% of which have been used; and the NAT-B owns 80 public network IP addresses, 1% of which have been used; and the NAT-A and NAT-B send their own capabilities to the DHCP server respectively.

In step S103, the DHCP server calculates for the NAT-A and NAT-B, and finds that the NAT-B has the most remaining resources and the strongest capability. Therefore, the DHCP server sets a capability value of the NAT-A to be 1 and a capability value of the NAT-B to be 2 according to a strategy.

In step S104, the home gateway acquires an IP address of the home gateway through the DHCP protocol and sends a DHCP request message.

In step S105, the DHCP server receives the message sent by the home gateway, and encapsulates the IP address and capability value of the NAT-A device and the IP address and capability value of the NAT-B device into an option of a DHCP response message to send to the home gateway.

In step S106, the home gateway receives the DHCP response message, parses the IP addresses and capability values of the NAT-A and NAT-B, selects the NAT-B as the PCP server according to the user strategy, and newly establishes a session.

In step 107, after the session is established, the Internet user has access actively the intranet user successfully through the established session.

FIG. 8 is a schematic diagram of the second embodiment of the present invention. As shown in FIG. 8, the intranet user is an IPv6 user, and the intranet user and an Internet IPv4 user access with each other through an NAT64-A and an NAT64-B. The intranet user is used as the PCP client, and the NAT64-A and NAT64-B are used as the PCP servers respectively, and an access server is used as the bearer protocol server. Steps are as follows.

In step S201, the Internet user needs to access the intranet user by traversing a Firewall, and the intranet user needs to create a session at the NAT64-A or the NAT64-B.

In step S202, the NAT64-A owns 15 public network IP addresses, 60% of which have been used; and the NAT64-B owns 15 public network IP addresses, 50% of which have been used; and the NAT64-A and NAT64-B send their own capabilities to the access server respectively.

In step S203, the access server calculates for the NAT64-A and NAT64-B, and finds that the NAT64-B has the most remaining resources and the strongest capability. Therefore, the access server sets the capability value of the NAT-A to be 1 and the capability value of the NAT-B to be 2 according to a strategy.

In step S204, the intranet user performs a neighbor discovery through a neighbor discovery (ND) protocol and sends a ND message.

In step S205, the access server receives the message sent by the intranet user, and encapsulates the IP address and capability value of the NAT64-A device and the IP address and capability value of the NAT64-B device into an option of a ND response message to send to the intranet user.

In step S206, the intranet user receives the ND response message, parses the IP addresses and capability values of the NAT64-A and NAT64-B, selects the NAT64-B as the PCP server according to the user strategy, and newly establishes a session.

In step 207, after the session is established, the Internet IPv4 user accesses actively the intranet IPv6 user successfully through the established session.

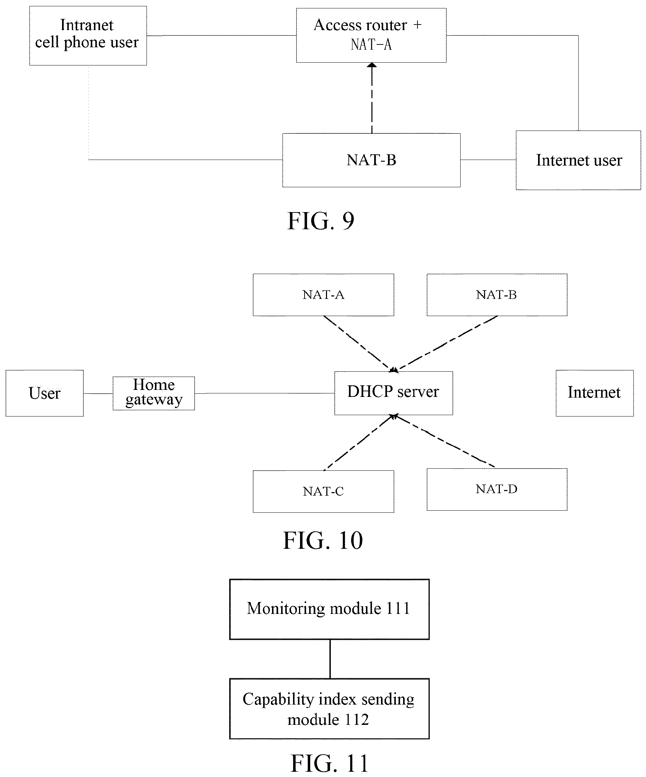

FIG. 9 is a schematic diagram of a third embodiment of the present invention. As shown in FIG. 9, the intranet user is an IPv4 user, and the intranet user and the Internet user access with each other through an access router or the NAT-B. Herein, the access router integrates functions of the NAT-A (PCP server) and the bearer protocol server therein. The intranet user is used as the PCP client, and the NAT-B is used as the PCP server. Steps are as follows.

In step S301, the Internet user needs to access the intranet user by traversing a Firewall, and the intranet user needs to create a session at the access router or the NAT-B.

In step S302, the access router owns 105 public network IP addresses, 60% of which have been used; and the NAT-B owns 150 public network IP addresses, 50% of which have been used; and the NAT-B sends its own capability to the access router.

In step S303, the access router acquires the number of resources and the utilization rate of the resources of the NAT-A and the NAT-B. Therefore, the DHCP server of the access router sets the capability value of the NAT-A to be 0x693C. Herein, the hexadecimal number 0x69 represents the decimal number 105, and 0x3C represents the decimal number 60, and 0x693C represents 105 public network addresses and the utilization rate of 60%. The DHCP server sets the capability value of the NAT-B to be 0x6932. Herein, the hexadecimal number 0x96 represents the decimal number 150, and 0x32 represents the decimal number 50, and 0x9632 represents 150 public network addresses and the utilization rate of 50%.

In step S304, the intranet cell phone user acquires its own IP address through the DHCP protocol and sends a DHCP request message.

In step S305, the access server receives the message sent by the intranet user, and encapsulates the IP address and capability value of the access router and the IP address and capability value of the NAT-B device into an option of a DHCP response message to send to the intranet user.

In step S306, the intranet cell phone user receives the DHCP response message, parses the IP addresses and capability values of the access router and NAT-B. The intranet cell phone user parses its own user strategy, and finds that the cell phone user is a low level cell phone user, therefore, the intranet cell phone user selects the NAT-A with weaker capability automatically, i.e., the access router, to be used as the PCP server and establishes an NAT session with the access router.

In step 307, after the session is established, the Internet user accesses actively the intranet cell phone user successfully through the established session.

FIG. 10 is a schematic diagram of a fourth embodiment of the present invention. As shown in FIG. 10, an intranet user and an Internet user may access with each other through the NAT-A, NAT-B, NAT-C or NAT-D. A home gateway is used as a PCP client, and the NAT-A, NAT-B, NAT-C and NAT-D are used as PCP servers respectively, and a DHCP server is used as a bearer protocol server. Steps are as follows.

In step S401, the Internet user needs to access the intranet user by traversing a Firewall, and the intranet user needs to create a session at the NAT-A or the NAT-B.

In step S402, the NAT-A owns 10 public network IP addresses, 80% of which have been used, and 2 resources remain; the NAT-B owns 20 public network IP addresses, 70% of which have been used, and 6 resources remain; the NAT-C owns 50 public network IP addresses, 20% of which have been used, and 40 resources remain; the NAT-D owns 40 public network IP addresses, 60% of which have been used, and 16 resources remain; and the NAT-A, NAT-B, NAT-C and NAT-D send their own capabilities to the DHCP server respectively.

In step S403, the DHCP server calculates for the NAT-A, NAT-B, NAT-C and NAT-D, and divides the remaining resources into four levels. When the number of the remaining resources is less than 10, the capability value is 1. When the number of the remaining resources is between 10 and 20, the capability value is 2. When the number of the remaining resources is between 20 and 30, the capability value is 3. And when the number of the remaining resources is more than 30, the capability value is 4. Therefore, the DHCP server sets the capability values of the NAT-A and the NAT-B to be 1, and sets the capability value of the NAT-C to be 2, and sets the capability value of the NAT-D to be 4, according to the strategy.

In step S404, the home gateway acquires its own IP address through the DHCP protocol and sends a DHCP request message.

In step S405, the DHCP server receives the message sent by the home gateway, and encapsulates the IP address and capability value of the NAT-A device, the IP address and capability value of the NAT-B device, the IP address and capability value of the NAT-C device and the IP address and capability value of the NAT-D device into an option of a DHCP response message to send to the home gateway.

In step S406, the home gateway receives the DHCP response message, parses the IP addresses and capability values of the NAT-A, NAT-B, NAT-C and NAT-D, and selects the NAT-B as the PCP server and newly establishes a session.

In step 407, after the session is established, the Internet user accesses actively the intranet user successfully through the established session.

Accordingly, the embodiments of the present invention further propose apparatuses for sending, transferring and acquiring a capability.

As shown in FIG. 11, an apparatus for sending a capability, applied to a PCP server, includes a monitoring module 111 and a capability index sending module 112.

The monitoring module 111 is configured to monitor its own PCP server capability index.

The capability index sending module 112 is configured to send its own PCP server capability index to a bearer protocol server.

Herein, the PCP server capability index includes a number of PCP resources and/or a utilization rate of the PCP resources.

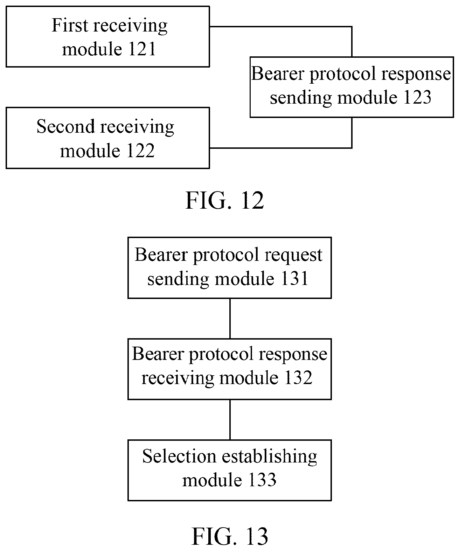

As shown in FIG. 12, an apparatus for transferring a capability, applied to a bearer protocol server, includes a first receiving module 121, a second receiving module 122 and a bearer protocol response sending module 123.

The first receiving module 121 is configured to receive a PCP server capability index or capability indices sent by one or more PCP servers, herein the PCP server capability index includes a number of PCP resources and/or a utilization rate of the PCP resources.

The second receiving module 122 is configured to receive a bearer protocol request sent by a PCP client, and notify the bearer protocol response sending module.

The bearer protocol response sending module 123 is configured to send an IP address or IP addresses of the one or more PCP servers and PCP server capability information corresponding to the PCP server capability index or capability indices to the PCP client according to the notification from the second receiving module 122.

The apparatus for transferring a capability may further include a capability value setting module.

The capability value setting module is configured to set the corresponding capability value or capability values according to the received one or more PCP server capability indices and send the corresponding capability value or capability values to the bearer protocol response sending module 123. Herein, the PCP server capability information contains a capability value or capability values.

The capability value setting module may set the corresponding capability values according to the received one or more PCP server capability indices based on strength of the capabilities, or may use directly the PCP server capability indices as the capability values.

As shown in FIG. 13, an apparatus for acquiring a capability, applied to a PCP client, includes a bearer protocol request sending module 131, a bearer protocol response receiving module 132 and a selection establishing module 133.

The bearer protocol request sending module 131 is configured to send a bearer protocol request to a bearer protocol server.

The bearer protocol response receiving module 132 is configured to receive an IP address or IP addresses of one or more PCP servers and corresponding PCP server capability information returned by the bearer protocol server.

The selection establishing module 133 is configured to select one of the one or more PCP servers according to the PCP server capability information to establish a PCP session.

The selection establishing module 133 may select a PCP server according a selection strategy. The selection strategy may be to select a PCP server with the strongest capability, or to select a PCP server with the corresponding capability level according to a user level principle.

People having ordinary skill in the art can understand that all or part of steps in the embodiments described above can be carried out by using a computer program flow. The computer program may be stored in a computer readable storage medium. The computer program, when executed on the corresponding hardware platform (such as system, device, apparatus and component and the like), include one or a combination of steps in the method embodiments.

In an exemplary embodiment, all or part of steps in the embodiments described above may be carried out by using integrated circuits. These steps may be implemented by making integrated circuit modules one by one, or by making a plurality of modules thereof into a single integrated circuit module to implement. Various apparatuses/functional modules/functional units in the embodiments described above, which may be implemented by using general computing apparatuses, may be centralized on a single computing apparatus or distributed across a network formed from multiple computing apparatuses.

Various apparatuses/functional modules/functional units in the embodiments described above, when implemented in a form of software functional module and sold or used as stand-stone products, may be stored in a computer readable storage medium. The computer readable storage medium mentioned above may be a read-only memory, a magnetic disk or an optical disk, etc.

### Industrial Applicability

In embodiments of the present invention, the problem in the related technology that the PCP client cannot acquire the PCP server capabilities, thereby resulting in the defect that the PCP client cannot select a PCP server, is solved by transferring the related PCP server capabilities to the PCP client, which provides an efficient basis for the PCP client to select the server.

## Claims

1. A method for sending a capability comprising:
monitoring, by a port control protocol, PCP, server, a PCP server capability index of the PCP server; and
sending, by the PCP server, the PCP server capability index of the PCP server to a bearer protocol server;
wherein the PCP server capability index comprises a number of PCP resources and/or a utilization rate of the PCP resources; wherein,
the number of the PCP resources refers to the number of protocol ports owned by the PCP server;
the utilization rate of the PCP resources refers to a percent of the number of the protocol ports which have been used by the PCP server divided by the number of the PCP resources; wherein,
the bearer protocol server can be a network device including a DHCP server, an access router or a PCP server; wherein,
the PCP server monitors its own PCP server capability index at a certain time interval and reports them to the bearer protocol server periodically.

2. A method for transferring a capability comprising:
receiving, by a bearer protocol server, a PCP server capability index or capability indices sent by one or more port control protocol, PCP, servers, wherein the PCP server capability index comprises a number of PCP resources and/or a utilization rate of the PCP resources; and
when the bearer protocol server receives a bearer protocol request sent by a PCP client, sending an IP address or IP addresses of the one or more PCP servers and PCP server capability information corresponding to the PCP server capability index or capability indices to the PCP client; wherein,
the number of the PCP resources refers to the number of protocol ports owned by the PCP server;
the utilization rate of the PCP resources refers to a percent of the number of the protocol ports which have been used by the PCP server divided by the number of the PCP resources; wherein,
the bearer protocol server can be a network device including a DHCP server, an access router or a PCP server; wherein,
the PCP server monitors its own PCP server capability index at a certain time interval and reports them to the bearer protocol server periodically.

3. The method according to claim 2, wherein
the PCP server capability information contains a capability value; and
after the bearer protocol server receives the PCP server capability index or capability indices sent by the one or more PCP servers,
the bearer protocol server sets a corresponding capability value or capability values according to the received one or more PCP server capability indices based on strength of a capability; wherein, the PCP server capability information corresponds to the PCP server capability indices and contains capability values; wherein,
the bearer protocol server sorts the capabilities in the order of strength according to the received one or more PCP server capability indices, and sets the corresponding capability values based on the sort result; or the PCP server capability indices are divided into different intervals according to the strength of the capabilities, and the PCP server capability indices located in different intervals corresponds to different capability values.

4. The method according to claim 2, wherein
the PCP server capability information contains a capability value; and
after the bearer protocol server receives the PCP server capability index or capability indices sent by the one or more PCP servers,
the bearer protocol server uses the PCP server capability index or capability indices as the capability value or capability values.

5. The method according to any one of claims 2-4, further comprising:
receiving, by the PCP client, the IP address or IP addresses of the one or more PCP servers and the corresponding PCP server capability information, and selecting one of the one or more PCP servers according to the PCP server capability information to establish a PCP session.

6. A method for acquiring a capability comprising:
sending, by a port control protocol, PCP, client, a bearer protocol request to a bearer protocol server;
receiving an IP address or IP addresses of one or more PCP servers and corresponding PCP server capability information returned by the bearer protocol server; and
selecting one of the one or more PCP servers according to the PCP server capability information to establish a PCP session; wherein,
the number of the PCP resources refers to the number of protocol ports owned by the PCP server;
the utilization rate of the PCP resources refers to a percent of the number of the protocol ports which have been used by the PCP server divided by the number of the PCP resources; wherein,
the bearer protocol server can be a network device including a DHCP server, an access router or a PCP server; wherein,
the PCP server monitors its own PCP server capability index at a certain time interval and reports them to the bearer protocol server periodically.

7. An apparatus for sending a capability, applied to a PCP server, comprising:
a monitoring module (111) configured to monitor a PCP server capability index of the PCP server; and
a capability index sending module (112) configured to send the PCP server capability index of the PCP server to a bearer protocol server;
wherein the PCP server capability index comprises a number of PCP resources and/or a utilization rate of the PCP resources; wherein,
the number of the PCP resources refers to the number of protocol ports owned by the PCP server;
the utilization rate of the PCP resources refers to a percent of the number of the protocol ports which have been used by the PCP server divided by the number of the PCP resources; wherein,
the bearer protocol server can be a network device including a DHCP server, an access router or a PCP server; wherein,
the PCP server monitors its own PCP server capability index at a certain time interval and reports them to the bearer protocol server periodically.

8. An apparatus for transferring a capability, applied to a bearer protocol server, comprising:
a first receiving module (121) configured to receive a port control protocol, PCP, server capability index or capability indices sent by one or more PCP servers, wherein the PCP server capability index comprises a number of PCP resources and/or a utilization rate of the PCP resources;
a second receiving module (122) configured to receive a bearer protocol request sent by a PCP client, and notify a bearer protocol response sending module; and
the bearer protocol response sending module configured to send an IP address or IP addresses of the one or more PCP servers and PCP server capability information corresponding to the PCP server capability index or capability indices to the PCP client according to a notification from the second receiving module; wherein,
the number of the PCP resources refers to the number of protocol ports owned by the PCP server;
the utilization rate of the PCP resources refers to a percent of the number of the protocol ports which have been used by the PCP server divided by the number of the PCP resources; wherein,
the bearer protocol server can be a network device including a DHCP server, an access router or a PCP server; wherein,
the PCP server monitors its own PCP server capability index at a certain time interval and reports them to the bearer protocol server periodically.

9. The apparatus according to claim 8, further comprising:
a capability value setting module configured to set a corresponding capability value or capability values according to the received one or more PCP server capability indices, and send the corresponding capability value or capability values to the bearer protocol response sending module;
the PCP server capability information contains the capability value or capability values.

10. An apparatus for acquiring a capability, applied to a PCP client, comprising:
a bearer protocol request sending module (131) configured to send a bearer protocol request to a bearer protocol server;
a bearer protocol response receiving module (132) configured to receive an IP address or IP addresses of one or more PCP servers and corresponding PCP server capability information returned by the bearer protocol server; and
a selection establishing module (133) configured to select one of the one or more PCP servers according to the PCP server capability information to establish a PCP session; wherein,
the number of the PCP resources refers to the number of protocol ports owned by the PCP server;
the utilization rate of the PCP resources refers to a percent of the number of the protocol ports which have been used by the PCP server divided by the number of the PCP resources; wherein,
the bearer protocol server including a DHCP server, an access router or a PCP server; wherein,
the PCP server monitors its own PCP server capability index at a certain time interval and reports them to the bearer protocol server periodically.

11. A computer-readable storage medium where computer executable instructions are stored, the computer executable instructions being used to implement the method according to any one of claims 1-6.

## Patentansprüche

1. Verfahren zum Senden einer Fähigkeit, umfassend:
Überwachen, durch einen Portsteuerprotokoll-, PCP, Server, eines PCP-Server-Fähigkeitsindexes des PCP-Servers; und
Senden, durch den PCP-Server, des PCP-Server-Fähigkeitsindexes des PCP-Servers an einen Trägerprotokoll-Server;
wobei der PCP-Server-Fähigkeitsindex eine Anzahl von PCP-Ressourcen und/oder eine Nutzungsrate der PCP-Ressourcen umfasst; wobei
die Anzahl von PCP-Ressourcen sich auf die Anzahl von Protokollports bezieht, die im Besitz des PCP-Servers sind;
die Nutzungsrate der PCP-Ressourcen sich auf einen Prozentsatz der Anzahl von Protokollports bezieht, die von dem PCP-Server benutzt wurden, geteilt durch die Anzahl von PCP-Ressourcen; wobei
der Trägerprotokoll-Server ein Netzwerkgerät sein kann, das einen DHCP-Server, einen Zugriffsrouter oder einen PCP-Server beinhaltet; wobei
der PCP-Server seinen eigenen PCP-Server-Fähigkeitsindex mit einem bestimmten Zeitintervall überwacht, und sie periodisch an den Trägerprotokoll-Server meldet.

2. Verfahren zum Übertragen einer Fähigkeit, umfassend:
Empfangen, durch einen Trägerprotokoll-Server, eines PCP-Server-Fähigkeitsindexes oder -Fähigkeitsindizes, die von einem oder mehreren Portsteuerprotokoll-, PCP-, Servern gesendet werden, wobei der PCP-Server-Fähigkeitsindex eine Anzahl von PCP-Ressourcen und/oder eine Nutzungsrate der PCP-Ressourcen umfasst; und
wenn der Trägerprotokoll-Server eine Trägerprotokoll-Server-Anforderung empfängt, die von einem PCP-Klienten gesendet wurde, Senden einer IP-Adresse oder IP-Adressen des einen oder der mehreren PCP-Servern und der PCP-Server-Fähigkeitsinformation, die dem PCP-Server-Fähigkeitsindex oder den -Fähigkeitsindizes entspricht, an den PCP-Klienten; wobei
die Anzahl der PCP-Ressourcen sich auf die Anzahl der Protokollports bezieht, die im Besitz des PCP-Servers sind;
die Nutzungsrate der PCP-Ressourcen sich auf einen Prozentsatz der Anzahl der Protokollports bezieht, die von dem PCP-Server benutzt wurden, geteilt durch die Anzahl der PCP-Ressourcen; wobei
der Trägerprotokoll-Server ein Netzwerkgerät sein kann, das einen DHCP-Server beinhaltet, einen Zugriffsrouter oder einen PCP-Server; wobei
der PCP-Server seinen eigenen PCP-Server-Fähigkeitsindex in einem bestimmten Zeitintervall überwacht und sie periodisch an den Trägerprotokoll-Server meldet.

3. Verfahren nach Anspruch 2, wobei
die PCP-Server-Fähigkeitsinformation einen Fähigkeitswert enthält; und
nachdem der Trägerprotokoll-Server den PCP-Server-Fähigkeitsindex oder - Fähigkeitsindizes empfängt, die von dem einen oder mehreren PCP-Server(n) gesendet wurden,
der Trägerprotokoll-Server einen entsprechenden Fähigkeitswert oder Fähigkeitswerte gemäß dem/den empfangenen einem ersten oder mehreren PCP-Server-Fähigkeitsindizes basierend auf der Stärke einer Fähigkeit einstellt; wobei die PCP-Server-Fähigkeitsinformation den PCP-Server-Fähigkeitsindizes entspricht und Fähigkeitswerte enthält; wobei
der Trägerprotokoll-Server die Fähigkeiten in der Reihenfolge ihrer Stärke gemäß dem/den empfangenen einem ersten oder mehreren PCP-Server-Fähigkeitsindizes sortiert, und die entsprechenden Fähigkeitswerte basierend auf dem Sortierungsergebnis einstellt; oder die PCP-Server-Fähigkeitsindizes in verschiedene Intervalle gemäß der Stärke der Fähigkeiten aufgeteilt sind, und die in verschiedenen Intervallen angeordneten PCP-Server-Fähigkeitsindizes verschiedenen Fähigkeitswerten entsprechen.

4. Verfahren nach Anspruch 2, wobei
die PCP-Server-Fähigkeitsinformation einen Fähigkeitswert enthält; und
nachdem der Trägerprotokoll-Server den PCP-Server-Fähigkeitsindex oder - Fähigkeitsindizes empfängt, die von dem einen oder mehreren PCP-Server(n) gesendet wurden,
der Trägerprotokoll-Server den PCP-Fähigkeitsindex oder -Fähigkeitsindizes als Fähigkeitswert oder Fähigkeitswerte verwendet.

5. Verfahren nach einem der Ansprüche 2-4, weiter umfassend:
Empfangen, durch den PCP-Klienten, der IP-Adresse oder IP-Adressen des einen oder mehreren PCP-Servers und der entsprechenden PCP-Fähigkeitsinformation, und Auswählen eines des einen oder der mehreren PCP-Servern gemäß der PCP-Server-Fähigkeitsinformation, um eine PCP-Session einzurichten.

6. Verfahren zum Erfassen einer Fähigkeit, umfassend:
Senden, durch einen Portsteuerprotokoll-, PCP-Klienten, einer Trägerprotokoll-Anforderung an einen Trägerprotokoll-Server;
Empfangen einer IP-Adresse oder von IP-Adressen eines oder mehrerer PCP-Server und entsprechender PCP-Server-Fähigkeitsinformationen, die vom Trägerprotokoll-Server zurückgegeben werden; und
Auswählen eines der einen oder mehreren PCP-Server gemäß den PCP-Server-Fähigkeitsinformationen, um eine PCP-Session; wobei
die Anzahl der PCP-Ressourcen sich auf die Anzahl von Protokollports bezieht, die im Besitz des PCP-Servers sind;
die Nutzungsrate der PCP-Ressourcen sich auf einen Prozentsatz der Anzahl der Protokollports bezieht, die von dem PCP-Server benutzt wurden, geteilt durch die Anzahl von PCP-Ressourcen; wobei
der Trägerprotokoll-Server ein Netzwerkgerät sein kann, das einen DHCP-Server, einen Zugriffsrouter oder einen PCP-Server beinhaltet; wobei
der PCP-Server seinen eigenen PCP-Server-Fähigkeitsindex mit einem bestimmten Zeitintervall überwacht, und sie periodisch an den Trägerprotokoll-Server meldet.

7. Vorrichtung zum Senden einer auf einen PCP-Server angewendeten Fähigkeit, umfassend:
ein Überwachungsmodul (111), das konfiguriert ist, um einen PCP-Server-Fähigkeitsindex des PCP-Servers zu überwachen; und
ein Fähigkeitsindex-Sendemodul (112), das konfiguriert ist, um den PCP-Server-Fähigkeitsindex des PCP-Servers an einen Trägerprotokoll-Server zu senden;
wobei der PCP-Server-Fähigkeitsindex eine Anzahl von PCP-Ressourcen und/oder eine Nutzungsrate der PCP-Ressourcen umfasst; wobei
die Anzahl von PCP-Ressourcen sich auf die Anzahl von Protokollports bezieht, die im Besitz des PCP-Servers sind;
die Nutzungsrate der PCP-Ressourcen sich auf einen Prozentsatz der Anzahl von Protokollports bezieht, die von dem PCP-Server benutzt wurden, geteilt durch die Anzahl von PCP-Ressourcen; wobei
der Trägerprotokoll-Server ein Netzwerkgerät sein kann, das einen DHCP-Server, einen Zugriffsrouter oder einen PCP-Server beinhaltet; wobei
der PCP-Server seinen eigenen PCP-Server-Fähigkeitsindex mit einem bestimmten Zeitintervall überwacht, und sie periodisch an den Trägerprotokoll-Server meldet.

8. Vorrichtung zum Übertragen einer auf einen Trägerprotokoll-Server angewendeten Fähigkeit, umfassend:
ein erstes Empfangsmodul (121), das konfiguriert ist, um ein Portsteuerprotokoll, ein PCP, ein Server-Fähigkeitsindex oder-Fähigkeitsindizes zu empfangen, die von einem oder mehreren PCP-Servern gesendet wurden, wobei der PCP-Server-Fähigkeitsindex eine Anzahl von PCP-Ressourcen und/oder eine Nutzungsrate der PCP-Ressourcen umfasst;
ein zweites Empfangsmodul (122), das konfiguriert ist, um eine von einem PCP-Klienten gesendete Trägerprotokoll-Anforderung zu empfangen und an ein Trägerprotokollantwort-Sendemodul zu melden; und
das Trägerprotokollantwort-Sendemodul konfiguriert ist, um eine IP-Adresse oder IP-Adressen des einen oder der mehreren PCP-Server und PCP-Server-Fähigkeitsinformationen, die dem PCP-Server-Fähigkeitsindex oder den -Fähigkeitsindizes entsprechen, an den PCP-Klienten gemäß einer Meldung vom zweiten Empfangsmodul zu senden; wobei
die Anzahl von PCP-Ressourcen sich auf die Anzahl von Protokollports bezieht, die im Besitz des PCP-Servers sind;
die Nutzungsrate der PCP-Ressourcen sich auf einen Prozentsatz der Anzahl von Protokollports bezieht, die von dem PCP-Server benutzt wurden, geteilt durch die Anzahl von PCP-Ressourcen; wobei
der Trägerprotokoll-Server ein Netzwerkgerät sein kann, das einen DHCP-Server, einen Zugriffsrouter oder einen PCP-Server beinhaltet; wobei
der PCP-Server seinen eigenen PCP-Server-Fähigkeitsindex mit einem bestimmten Zeitintervall überwacht, und sie periodisch an den Trägerprotokoll-Server meldet.

9. Vorrichtung nach Anspruch 8, ferner umfassend:
ein Fähigkeitswert-Einstellmodul, das konfiguriert ist, um einen entsprechenden Fähigkeitswert oder Fähigkeitswerte gemäß dem empfangenen einen oder mehreren PCP-Server-Fähigkeitsindizes einzustellen, und den entsprechenden Fähigkeitswert oder die entsprechenden Fähigkeitswerte an das Trägerprotokollantwort-Sendemodul zu senden;
die PCP-Server-Fähigkeitsinformationen den Fähigkeitswert oder die Fähigkeitswerte enthaltend.

10. Vorrichtung zum Erfassen einer auf einen PCP-Klienten angewendeten Fähigkeit, umfassend:
ein Trägerprotokoll-Anforderungs-Sendemodul (131), das konfiguriert ist, um eine Trägerprotokollanforderung an einen Trägerprotokoll-Server zu senden;
ein Trägerprotokollantwort-Empfangsmodul (132), das konfiguriert ist, um eine IP-Adresse oder IP-Adressen von einem oder mehreren PCP-Server(n) und entsprechenden PCP-Server-Fähigkeitsinformationen die vom Trägerprotokollserver zurückgegeben werden, zu empfangen; und
ein Auswahleinrichtungsmodul (133), das konfiguriert ist, um einen des einen oder mehreren PCP-Server gemäß den PCP-Server-Fähigkeitsinformationen auszuwählen, um eine PCP-Session einzurichten; wobei
die Anzahl von PCP-Ressourcen sich auf die Anzahl von Protokollports bezieht, die im Besitz des PCP-Servers sind;
die Nutzungsrate der PCP-Ressourcen sich auf einen Prozentsatz der Anzahl von Protokollports bezieht, die von dem PCP-Server benutzt wurden, geteilt durch die Anzahl von PCP-Ressourcen; wobei
der Trägerprotokoll-Server einen DHCP-Server, einen Zugriffsrouter oder einen PCP-Server beinhaltet; wobei
der PCP-Server seinen eigenen PCP-Server-Fähigkeitsindex mit einem bestimmten Zeitintervall überwacht, und sie periodisch an den Trägerprotokoll-Server meldet.

11. Computerlesbares Speichermedium, auf dem computerausführbare Anweisungen gespeichert sind, wobei die computerausführbaren Anweisungen zur Implementierung des Verfahrens nach einem der Ansprüche 1 bis 6 verwendet werden.

## Revendications

1. Procédé d'envoyer une capacité comprenant:
la surveillance d'un indice de capacité de serveur PCP du serveur PCP, par un protocole de contrôle de port (PCP), serveur; et
l'envoi de l'indice de capacité du serveur PCP du serveur PCP à un support serveur de protocole, par le serveur PCP;
dans lequel l'indice de capacité du serveur PCP comprend quelques ressources PCP et/ou un taux d'utilisation des ressources PCP; dans lequel,
le nombre des ressources PCP veut dire le nombre de ports de protocole qui appartiennent au serveur PCP;
le taux d'utilisation des ressources PCP veut dire un pourcentage du nombre des ports de protocole qui ont été utilisés par le serveur PCP, divisés par le nombre des ressources PCP; dans lequel,
le serveur de protocole support peut être un périphérique réseau, y compris un serveur DHCP, un routeur d'accès ou un serveur PCP; dans lequel,
le serveur PCP surveille son propre indice de capacité de serveur PCP à un intervalle de temps spécifique et les signale périodiquement au serveur de protocole support.

2. Un procédé de transmission d'une capacité comprenant:
recevoir un indice de capacité de serveur PCP ou des indices de capacité qui sont envoyée par un ou plus protocole de contrôle de port(PCP), serveurs, par un serveur de protocole support, dans lesquels l'indice de capacité de serveur PCP comprend quelques ressources PCP et/ou un taux d'utilisation des ressources PCP; et
lorsque le serveur de protocole support reçoit une demande de protocole support envoyée par un client PCP, l'envoi d'une adresse IP ou des adresses IP du ou des serveurs PCP et des informations de capacité de serveur PCP correspondant à l'indice de capacité du serveur PCP ou aux indices de capacité au client PCP; dans lequel,
le nombre des ressources PCP veut dire le nombre de ports de protocole qui appartiennent au PCP serveur;
le taux d'utilisation des ressources PCP veut dire un pourcentage du nombre des ports de protocole qui ont été utilisés par le serveur PCP, divisés par le nombre des ressources PCP; dans lequel,
le serveur de protocole support peut être un périphérique réseau, y compris un serveur DHCP, un routeur d'accès ou
un serveur PCP; dans lequel,
le serveur PCP surveille son propre indice de capacité de serveur PCP à un intervalle de temps spécifique et les signale périodiquement au serveur de protocole support.

3. Procédé selon la revendication 2, dans lequel
les informations de capacité du serveur PCP comprennent une valeur de capacité; et
quand le serveur de protocole support reçoit l'index de capacité du serveur PCP ou les indices envoyés par un ou plus serveurs PCP,
le serveur de protocole support établit une valeur de capacité ou plus valeurs de capacité correspondantes selon l'un ou plus indices de capacité de serveur PCP reçus sur la base de la puissance d'une capacité; dans lequel, les informations de capacité du serveur PCP sont conformes aux indices de capacité du serveur PCP et comprennent des valeurs de capacité; dans lequel,
le serveur de protocole support arrange les capacités en ordre de la force selon l'un ou plus indices de capacité de serveur PCP qui sont reçus et établit les valeurs de capacité correspondantes sur la base du résultat du tri; ou les indices de capacité du serveur PCP sont divisés en différents intervalles selon la force des capacités, et les indices de capacité du serveur PCP situés à différents intervalles sont conformes aux valeurs de capacité différentes.

4. Procédé selon la revendication 2, dans lequel
les informations de capacité du serveur PCP comprennent une valeur de capacité; et
quand le serveur de protocole support reçoit l'index ou les indices de capacité du serveur PCP envoyés par un ou plus serveurs PCP,
le serveur de protocole support utilise l'indice de capacité du serveur PCP ou les indices de capacité en tant que valeur de capacité ou valeurs de capacité.

5. Procédé selon toute des revendications 2 à 4, comprenant en outre:
recevoir l'adresse IP ou les adresses IP du ou des serveurs PCP et les informations de capacité du serveur PCP correspondantes, par le client PCP, et sélectionner un des un ou plus les serveurs PCP selon les informations de capacité du serveur PCP afin d'établir une session PCP.

6. Une méthode pour acquérir une capacité comprenant:
envoyer une demande de protocole support à un serveur de protocole support, par un protocole de contrôle de port (PCP), client;
recevoir une adresse IP ou des adresses IP d'un ou plus serveurs PCP et les informations de capacité de serveur PCP correspondantes renvoyées par le serveur de protocole support; et
sélectionner un des un ou plus serveurs PCP selon les informations de capacité du serveur PCP afin d'établir une session PCP; dans lequel,
le nombre des ressources PCP veut dire le nombre de ports de protocole qui appartiennent au PCP serveur;
le taux d'utilisation des ressources PCP veut dire un pourcentage du nombre des ports de protocole qui ont été utilisés par le serveur PCP, divisés par le nombre des ressources PCP; dans lequel,
le serveur de protocole support peut être un périphérique réseau, y compris un serveur DHCP, un accès routeur ou
un serveur PCP; dans lequel,
le serveur PCP surveille son propre indice de capacité de serveur PCP à un intervalle de temps spécifique et les signale périodiquement au serveur de protocole support.

7. Un appareil pour envoyer une capacité, appliqué à un serveur PCP, comprenant:
un module de surveillance (111)
configuré pour surveiller un index de capacité de serveur PCP du serveur PCP; et
un module d'envoi de l'index de capacité (112)
configuré à envoyer l'indice de capacité de serveur PCP du
serveur PCP à un serveur de protocole support;
dans lequel l'indice de capacité de serveur PCP comprend un nombre de ressources PCP et/ou un taux d'utilisation des ressources PCP; dans lequel,
le nombre des ressources PCP veut dire le nombre de ports de protocole qui appartiennent au serveur PCP;
le taux d'utilisation des ressources PCP veut dire un pourcentage du nombre des ports de protocole qui ont utilisés par le serveur PCP, divisés par le nombre des ressources PCP: dans lequel,
le serveur de protocole support peut être un périphérique réseau, y compris un serveur DHCP, un accès routeur ou
un serveur PCP, dans lequel,
le serveur PCP surveille son propre indice de capacité de serveur PCP à un intervalle de temps spécifique et les signale périodiquement au serveur de protocole support.

8. Un appareil de transmission d'une capacité, appliqué à un serveur de protocole support, comprenant:
un premier module de réception (121)
configuré pour recevoir un protocole de contrôle de port(PCP), indice de capacité ou indices de capacité serveur envoyés par un ou plus serveurs PCP, dans lequel l'indice de capacité de serveur PCP comprend un nombre de ressources PCP et/ou un taux d'utilisation des ressources PCP;
un deuxième module de réception (122)
configuré pour recevoir une demande de protocole support envoyée par un client PCP, et notifier un module d'envoi de réponse de protocole support; et
le module d'envoi de réponse au protocole support configuré pour envoyer une adresse IP ou une adresse IP les adresses du ou des serveurs PCP et des informations de capacité de serveur PCP correspondant à l'indice de capacité du serveur PCP ou aux indices de capacité du client PCP conformément à une notification du deuxième module de réception; dans lequel,
le nombre des ressources PCP veut dire le nombre de ports de protocole qui appartiennent au PCP serveur;
le taux d'utilisation des ressources PCP veut dire un pourcentage du nombre des ports de protocole qui ont été utilisés par le serveur PCP, divisés par le nombre des ressources PCP; dans lequel,
le serveur de protocole support peut être un périphérique réseau, y compris un serveur DHCP, un accès routeur ou
un serveur PCP; dans lequel,
le serveur PCP surveille son propre indice de capacité de serveur PCP à un intervalle de temps spécifique et
les signale périodiquement au serveur de protocole support.

9. L'appareil selon la revendication 8, comprenant en outre:
un module de réglage de valeur de capacité configuré pour établir une valeur de capacité ou des valeurs de capacité correspondant es selon l'un ou plus indices de capacité de serveur PC Preçus, et envoyer la valeur de capacité ou les valeurs de capacité correspondantes au module d'envoi de réponse de protocole support;
les informations de capacité du serveur PCP comprennent la valeur de capacité ou les valeurs de capacité.

10. Un appareil pour acquérir une capacité, appliqué à un client PCP, comprenant:
un module d'envoi de demande de protocole support (131)
configuré pour envoyer une demande de protocole support à un
serveur de protocole support;
un module de réception de réponse au protocole support (132)
configuré pour recevoir une adresse IP ou des adresses IP
d'un ou plus serveurs PCP et les informations de capacité de serveur PCP correspondantes renvoyées par le serveur de protocole support; et
un module d'établissement de sélection (133)
configuré pour sélectionner un des un ou plus serveurs PCP
selon les informations de capacité du serveur PCP pour établir une session PCP; dans lequel,
le nombre des ressources PCP veut dire le nombre de ports de protocole qui appartiennent au PCP serveur;
le taux d'utilisation des ressources PCP veut dire un pourcentage du nombre des ports de protocole qui ont été utilisés par le serveur PCP, divisés par le nombre des ressources PCP; dans lequel,
le serveur de protocole support, y compris un serveur DHCP, un routeur d'accès ou
un serveur PCP; dans lequel,
le serveur PCP surveille son propre indice de capacité de serveur PCP à un intervalle de temps spécifique et les signale périodiquement au serveur de protocole support.

11. Un support de stockage lisible par ordinateur où les instructions exécutables par ordinateur sont stockées, les instructions exécutables par ordinateur étant utilisées pour mettre en oeuvre le procédé selon toute des revendications 1 à 6.
